# EUROPÄISCHE PATENTSCHRIFT

(11) **EP 0 943 675 B1**
(45) Veröffentlichungstag und Bekanntmachung des Hinweises auf die Patenterteilung: **11.06.2003**
(21) Anmeldenummer: 98104591.7
(22) Anmeldetag: 13.03.1998
(51) Int. Cl.: C11B 1/10, C11B 9/02, A23L 1/221, A23L 1/275

(54) **Verfahren zur Lösungsmittel-extraktion hydrophober Verbingdungen**
Process for extraction by solvents of hydrophobic compounds
Procédé d'extraction par solvant de composés hydrophobes

(43) Veröffentlichungstag der Anmeldung: 22.09.1999
(73) Patentinhaber: Dr. Frische GmbH, D-63755 Alzenau (DE)
(72) Erfinder: Best, Bernd, 64546 Mörfelden-Walldorf (DE); Hegwein, Katja, Dipl. Ing., 64354 Reinheim/Odenwald (DE); Frische, Rainer, Dr., 60529 Frankfurt am Main (DE); Olbrich-Deussner, Dr., 64291 Darmstadt (DE); Seemann, Joachim, Dr., 63755 Alzenau (DE)
(74) Vertreter: Lippert, Marianne

(56) Entgegenhaltungen:
- EP-A- 0 038 959
- DE-A- 19 529 795
- FR-A- 2 316 323

## Beschreibung

Es ist seit langem allgemein bekannt, daß hydrophobe Verbindungen mit unpolaren Lösungsmitteln z.B. aliphatischen Kohlenwasserstoffen wie Hexan, Pflanzenölen oder Fettsäureestern langkettiger Fettsäuren wie Stearinsäuremethylester aus zuvor feinvermahlenen trockenen Stoffgemengen extrahierbar sind. Hiervon wird insbesondere bei der Gewinnung von hydrophoben Stoffen wie Farbstoffen aus nativen Materialien Gebrauch gemacht.

Auch können bekanntermaßen Pflanzenöle z.B. aus Ölsaaten-Schroten mit Hexan als Extraktionsmittel extrahiert werden. So hat sich entsprechend auch die Bestimmung des Restölgehaltes von entölten Ölsaatschroten mittels leicht flüchtiger Kohlenwasserstoffe wie Hexan in einer Soxhlet-Apparatur bewährt. Gleichermaßen ist es möglich, auf diesem Wege in handelsüblichem trockenem und entöltem Kakaopulver dessen Restkakaobuttergehalt auf einfache Weise und in kurzer Zeit durch Soxhlet-Extraktion zu bestimmen.

Der Fachmann weiß, daß derartige Extraktionen nur erfolgreich durchführbar sind, wenn die zu extrahierenden Stoffgemenge (hier die Ölsaatenschrote und der Kakao) vor der Lösungsmittelextraktion sorgfältig von Wasser befreit werden. Sobald im Gemenge ein Feuchtigkeitsgehalt über den geringen, vom Feststoff aus der Umgebungsluft absorptiv aufgenommenen Wassermengen vorliegt, sind diese Extraktionen von hydrophoben Verbindungen mit unpolaren Lösungsmitteln kaum mehr möglich. So ist bei Zugabe von Wassermengen zum trockenen Kakaopulver, die noch vollständig von diesem aufgenommen werden, ohne die Pulverstruktur zu zerstören, die Extraktion des Restkakaobuttergehalts nicht mehr möglich. Dies gilt z.B. auch für Karotten und andere im wesentlichen fettfreie native Stoffe wie Paprika, aus denen nicht an Öl, Fette oder Wachse gebundene Farbstoffe nur dann erfolgreich mit Öl oder auch z.B. Hexan extrahierbar sind, wenn das Ausgangsgemenge ausreichend vorgetrocknet wird. Bekanntermaßen ist eine solche Trocknung nicht nur aufwendig, sondern ruft auch bei Einhaltung entsprechender Vorsichtsmaßnahmen häufig Verluste durch thermische oder oxidative Zersetzung hervor.

Demgegenüber sind Extraktionen in Anwesenheit von Wasser dann möglich, wenn polarere Inhaltsstoffe, die zwar in Wasser kaum löslich sind, jedoch mit polareren, mit Wasser nicht mischbaren Extraktionslösungsmitteln extrahiert werden, die diese Inhaltsstoffe aber gut lösen (z.B. Ester kurzkettiger Alkylalkohole mit kurzkettigen Carbonsäuren). In der Regel handelt es sich hierbei sowohl bei den zu extrahierenden Stoffen als auch den Lösungsmitteln um Verbindungen, die im chemischen Aufbau sowohl polare wie auch unpolare Strukturmerkmale aufweisen und bei denen die unpolaren Strukturmerkmale nicht stark dominieren. In diesen Fällen hat die Anwesenheit von Feuchtigkeit oder Wasser keine die Extraktion verhindernde Wirkung. So kann z.B. Penicillin mit Butylacetat aus wäßrigem, saurem Fermentationsbrei in hoher Ausbeute schnell extrahiert werden. Prinzipiell kann natürlich mit einem solchen sowohl polare als auch unpolare Strukturmerkmale aufweisenden Extraktionslösungsmittel auch ein stark hydrophober bzw. unpolarer Inhaltsstoff in Anwesenheit von Wasser mit extrahiert werden, allerdings ist hier die Extraktion nicht selektiv und es werden unweigerlich auch polarere Inhaltsstoffe mit extrahiert. Dies gilt insbesondere für native Rohstoffe, da in diesen stets ein breites Spektrum unterschiedlich polarer Inhaltsstoffe (von stark unpolar bis stark polar) vorhanden sind. Daher geht der Oberbegriff des Patentanspruchs 1 von den zuvor dargelegten Fällen aus, bei denen mit einem unpolaren, in Wasser in der Fachliteratur als unlöslich eingestuften, Extraktionslösungsmittel der aufgeführten Art, insbesondere stark hydrophobe Inhaltsstoffe mit stark dominierenden unpolaren Strukturmerkmalen selektiv extrahierbar sind.

In der Praxis stellt sich aber gerade häufig das Problem der Isolierung geringer Mengen derartiger sehr hydrophober Verbindungen aus wasserhaltigen Stoffgemengen. Im Fall der Isolierung biologisch aktiver, stark hydrophober Wirkstoffe aus pflanzlichen bzw. tierischem Material handelt es sich dabei um Stoffwechselprodukte (wie β-Carotin) lebender Organismen, die sehr oft empfindlich gegenüber Wärme- oder Lufteinwirkung sind. Gerade hier sind die bisher erforderlichen Trocknungsmaßnahmen von erheblichem Nachteil.

Bei den üblichen Fettextraktionen insbesondere auch zum Zwecke der Bestimmung von Restölgehalten setzt man Apparaturen ein, die vergleichbar der Soxhlet-Apparatur arbeiten und die das Extraktionslösungsmittel in der Regel in einem kontinuierlichen Prozeß und in hohen Mengen durch das Rohmaterial leiten. Das mit dem zu extrahierenden Stoff beladene Lösungsmittel wird dann durch Abdestillieren, Gefriertrocknen oder andere geeignete Maßnahmen vom gelösten Stoff abgetrennt. Daneben gibt es noch die prinzipielle Möglichkeit, das Extraktionslösungsmittel mit dem feinvermahlenen Rohmaterial zu vermengen und nach Malaxieren abzupressen, abzufiltrieren oder auch einem Zentrifugalfeld auszusetzen, wobei eine feste Phase und eine flüssige Phase des mit den extrahierten Stoffen beladenen Lösungsmittels entsteht. Eine solche Vorgehensweise ist z.B. in Database WPI, Week 9110, Derwent Publ.Ltd, AN 91-070562 offenbart, wobei hier zur Gewinnung von Fischöl aus zerkleinertem Fisch mit dem Extraktionslösemittel n- oder i-Propanol gearbeitet wird, und das Extraktionslösemittel mit den extrahierten Lipiden wahlweise von den Feststoffen abfiltriert oder abzentrifugiert wird. In der US 2 875 061 ist offenbart, einen wasserhaltigen Fischbrei mit einem Fettgehalt über 4% vor einer Entwässerung, Hydrolyse und Desodorierung mit einem nicht wasser-mischbaren organischen Lösungsmittel wie Benzol, Methylenchlorid oder Trichlorethylen einer Fest-Flüssig-Fettextraktion zu unterziehen. Diese Lösungsmittel sind allerdings geringfügig wasserlöslich. Ferner lösen diese Lösungsmittel bekanntermaßen die meisten Fette gut und wirken so, daß stets bei der Extraktion auch andere Begleitstoffe erfaßt werden, so daß sich nicht die oben dargelegte selektive Wirkung ergibt. Dies ist im Fall der Abtrennung von Fischöl aus Fisch deshalb wenig bedeutend, da bezogen auf das Fischöl der Anteil der mit extrahierten Begleitstoffe nur wenige Promille bis maximal einige Prozent beträgt. In der US 3 565 634 wird Fett aus Fischmehl unter Zugabe von Wasser und einem nicht näher definierten Fettlösemittel in einer speziellen Apparatur extrahiert, wobei in an sich bekannter Weise die in einer Gegenstromextraktionsvorrichtung gewonnene Extraktionsphase in einer Schneckenzentrifuge und einem nachgeschalteten Gegenstromverdampfer vom Lösungsmittel befreit wird.

Da, wie bereits oben erwähnt, bekanntermaßen für Extraktionen allgemein und auch Fettextraktionen große Mengen an Extraktionslösungsmitteln erforderlich sind, empfiehlt sich speziell für die Gewinnung von Ölen, Fetten oder Wachsen aus nativen entsprechend öl-, fett- oder wachshaltigen Ausgangssubstanzen mit hoher Ausbeute als Alternative zu einer Extraktion ein rein physikalisches Trennverfahren, wie es in der DE 195 29 795 A1 offenbart ist. Nach diesem Verfahren sind z.B. Öle ohne Anwendung eines Extraktionslösungsmittels allein durch einen einzigen Zentrifugierschritt in Anwesenheit von Wasser und einem wasserlöslichen organischen Lösungsmittel (vorzugsweise in Form eines hier nicht als Extraktionsmittel wirkenden Alkohols) als zweite flüssige Phase abzentrifugierbar. Die erste flüssige Phase wird von der unter der ölphase liegenden alkoholischen Wasserphase gebildet, die wiederum klar von der ebenfalls gleichzeitig ausgebildeten Feststoffphase des sich einstellenden Dreiphasensystems festflüssig-flüssig getrennt vorliegt. Der Alkohol wirkt hier als eine Art Verdrängungsmittel und verhindert die Bildung einer sonst unvermeidbaren Emulsionsschicht zwischen wässriger Phase und ölphase. Zusammen mit dem Wasser, in dem er gut löslich ist, sorgt der Alkohol dafür, daß die drei Phasen, insbesondere die beiden flüssigen Phasen sich aufgrund ihres Dichteunterschiedes im Zentrifugalfeld mit sauberer Phasengrenze bilden. Kann der Dichteunterschied zwischen den beiden flüssigen Phasen allein mit dem wasserlöslichen Lösungsmittel bzw. Alkohol nicht ohne weiteres eingestellt werden, so ist in der DE 195 29 795 A1 vorgeschlagen, wasserunlösliche leichte Lösungsmittel wie Hexan oder Säuren und Salze zuzusetzen, die für eine benötigte Verschiebung der Dichteverhältnisse sorgen. In der DE 195 29 795 A1 wurde alternativ mit oder ohne Zusatz von Hexan speziell bei Leinsaat gearbeitet, um Leinsamenöl zu gewinnen. In beiden Fällen konnten Ausbeuten erzielt werden, die im wesentlichen im gleichen Bereich lagen. Die zugesetzten Mengen am wasserlöslichen Alkohol zur Erzielung der Dichteunterschiede in diesem Zentrifugenverfahren sind im Vergleich zu den benötigten Mengen eines Öl extrahierenden Lösungsmittels in einem alternativen Öl-Extraktionsverfahren gering. Auch ist das Zentrifugenverfahren mit nur einem Zentrifugierschritt schnell und mit hoher Ausbeute und kurzen Malaxierzeiten durchführbar.Allerdings sind hier öl-, fett- oder wachshaltige Ausgangssubstanzen wie Ölfrüchte Voraussetzung und es können in der abgetrennten Ölphase nur die öllöslichen Inhaltsstoffe in der aufschwimmenden Ölphase abgetrennt werden, die bei ihrer Entstehung im biologischen Wachstumsprozeß in das Öl gelangen und damit vor der Abtrennung durch Zentrifugieren im Öl gelöst waren. Prinzipiell können in einem solchen Zentrifugenverfahren nur solche Inhaltsstoffe in einer aufschwimmenden Phase abgetrennt werden, die in einer flüssigen Phase vorliegen.

FR-231 6323 beschreibt ein Verfahren zur Lösungsmittelextraktion von Karotin aus Orangenschalen ohne Vortrocknung der Schalen. Als Extraktionsmittel werden Ethanol und Öl eingesetzt. Das Verfahren besteht aus 3 bis 4 wiederholten Extraktionsvorgängen, wobei der Ethanol allmählich den Wassergehalt aus dem Ausgangsmaterial heraustreibt und dabei gleichzeitig das eingesetzte Öl in jedem Vorgang das enthaltene Karotin jeweils etwas besser herauslösen kann. Nach jedem Extraktionsvorgang wird die Ölphase von der Wasser/Ethanol-Phase durch einfaches Dekantieren getrennt.

Die Erfinder der vorliegenden Anmeldung hatten demgegenüber die Aufgabe zu lösen, ein möglichst effizientes Lösungsmittelextraktionsverfahren zu finden, das auch die erfolgreiche selektive Extraktion insbesondere stark hydrophober, als Feststoffe vorliegender Verbindungen aus Stoffgemengen mit unpolaren Lösungsmitteln ermöglicht, wobei die Stoffgemenge wasserhaltig sein dürfen und nicht vorgetrocknet werden müssen. Dies Aufgabe konnte mit den im Anspruch 1 angegebenen Merkmalen gelöst werden.

Die Versuche der Erfinder, z.B. aus nicht getrockneten Karotten mit Öl oder Hexan als Extraktionslösungsmittel das β-Carotin zu extrahieren, gelangen selbst bei feinster Vermahlung und langen Malaxierzeiten nur unzureichend. Dies war unabhängig davon, ob die Trennung der flüssigen Extraktionsphase nach dem Malaxieren durch Pressen, Abfiltern oder Zentrifugieren erfolgte. In jedem Fall wurde offenbar durch das vorhandene Wasser bewirkt, daß das Extraktionslösungsmittel nicht in Kontakt mit den zu extrahierenden Inhaltsstoffe geraten konnte.

Überraschenderweise stellten die Erfinder fest, daß eine erfolgreiche Lösung der zu extrahierenden Inhaltsstoffe im Extraktionslösungsmittel trotz des Wassergehalts möglich war, wenn ein wasserlöslicher Alkohol wie Methanol zugegeben wurde. Warum dieser Zusatz den sonst negativen Effekt des Wassergehalts auf die Extraktion unterdrückt, ist nicht geklärt. Die positive Wirkung konnte jedoch regelmäßig für unterschiedliche Ausgangsgemenge aus Karotten, Paprika, Tomaten und dergleichen ausgenutzt werden, bei denen nun ohne Trocknung eine erfolgreiche Extraktion z.B. von Farbstoffen mit dem Extraktionslösungsmittel Öl möglich war. Offenbar schafft der wasserlösliche Alkohol Bedingungen, die den zu isolierenden stark hydrophoben Stoff für das unpolare Extraktionslösungsmittel wie Pflanzenöl oder aliphatischer Kohlenwasserstoff zugänglich machen. Dies erst ermöglicht dann eine Herauslösung des zu isolierenden Stoffs aus den Feststoffen im Brei und seine Abtrennung zusammen mit dem Extraktionslösungsmittel bzw. Öl. bei dem erfindungsgemäß eingesetzten Öl handelt es sich stets um aus nativen Stoffen gewinnbare Triglyceride, d.h. um sogenannte native Öle.

Überraschend war hierbei auch, daß der nun im wässrigen Brei oder der knetfähigen Masse nach Anspruch 1 und damit auch zu einem gewissen Prozentsatz in den Extraktionslösungsmitteln enthaltene wasserlösliche Alkohol das Lösevermögen dieser unpolaren Extraktionslösungsmittel für die unpolaren zu lösenden Verbindungen nicht herabsetzte, wie der Fachmann erwartet hätte.

Es ergab sich ferner der für eine effiziente Verfahrensdurchführung nicht zu erwartende wichtige Vorteil, daß die Menge des zuzugebenden wasserlöslichen Alkohols in einen Bereich legbar war, in dem es gelang, das zugesetzte Öl mit den darin gelösten, aus dem Ausgangsgemenge extrahierten Farbstoffen in einem einzigen Zentrifugenschritt als obere Flüssigphase über einer den wasserlöslichen Alkohol enthaltenden Phase und einer Feststoffphase mit sauberer Phasengrenze zwischen beiden Flüssigphasen abzutrennen. Die Anwesenheit von Wasser war zudem nicht nur unschädlich, sondern es konnten darüber hinaus sogar noch erhebliche Wassermengen zugegeben werden.

Ein vergleichbares Schleuderbild wurde, wie oben dargelegt, bereits in der DE 195 29 795 A1 beschrieben, hier war jedoch das Öl Bestandteil des nativen Ausgangsgemenges und nicht ein zugesetztes Extraktionslösungsmittel, um nicht an Öl gebundene Feststoffe aus praktisch ölfreien Ausgangsgemengen selektiv abzutrennen. Insofern war es auch überraschend, daß es für die Erzielung dieses Schleuderbildes offenbar unerheblich ist, ob das Öl im Ausgangsstoffgemenge eingebunden ist oder einem im wesentlichen ölfreien Ausgangsgemenge als Extraktionsmittel zugesetzt wird. Unter im wesentlichen öl-, fett- oder wachsfrei werden im übrigen solche Gemenge verstanden, die einen Gehalt an Ölen, Wachsen oder Fetten haben, der einige Prozent nicht übersteigt und z.B. wie bei Karotten, Tomaten oder Paprika unter 0,5 % liegt.

Weitere Versuche z.B. mit den Karotten zeigten, daß alternativ zum nativen Öl auch mit aliphatischen Kohlenwasserstoffen wie Hexan gearbeitet werden kann und dann nach einmaligem Zentrifugieren eine entsprechende obere Hexan-Farbstoffphase gewinnbar ist. Unter aliphatischen Kohlenwasserstoffen werden hier solche für Ölextraktionen im Stand der Technik übliche leichtflüchtige Kohlenwasserstoffe verstanden, die rückstandsfrei verdampfen. Unter Hexan wird dementsprechend hier auch ein für Extraktionszwecke üblicherweise eingesetztes nicht chemisch reines Hexan verstanden.

Schließlich wurde auch mit stark entölten Ausgangsgemengen wie Kakaopulver gearbeitet, das, wie weiter oben erwähnt, bisher nur in trockener Form mit Hexan oder gegebenenfalls auch Öl von der Restkakaobutter durch Extraktion befreit werden konnte. Auch hier bietet das erfindungsgemäße Verfahren einen technischen Fortschritt, indem es die effiziente Extraktion auch sehr geringer Restmengen an flüssigen hydrophoben Verbindungen im Zentrifugenverfahren ermöglicht.

Von besonderer Bedeutung ist die Erfindung allerdings, wie bereits in der Aufgabe zum Ausdruck kommt, für die Lösungsmittelextraktion von stark unpolaren, hydrophoben festen Verbindungen, die mit mäßig polaren, nicht wasserlöslichen Hauptbestandteilen innigst (z.B. absorptiv und/oder adsorptiv) verbunden sind, wie fettlösliche Vitamine, Provitamine und Farbstoffe, und zwar aus wässrigen nicht öl-, fett- oder wachshaltigen Ausgangsstoffgemengen. Hier bietet sich auch noch als weiterer Vorteil die Möglichkeit, z.B. Vitamin E in einem Schritt in das Extraktionslösungsmittel Pflanzenöl zu überführen und nach Entfernen geringer im Öl gelöster Alkoholanteile ohne jede Weiterbehandlung direkt z.B. als Lebensmittel- oder Futtermittelzusatz oder Pharma- bzw. Kosmetikwirkstoff zu verwenden. Bislang wird hierzu häufig das Vitamin oder ein anderer Wirkstoff zunächst isoliert und dann mit Pflanzenöl zusammengebracht.

In allen Fällen konnte stets durch den Zusatz des wasserlöslichen Alkohols eine zweifache positive Wirkung erzielt werden, nämlich, daß erstens das anwesende Wasser den Zugriff des Extraktionslösungsmittels auf die zu extrahierenden hydrophoben Verbindungen nicht mehr unterbinden kann, und daß zweitens die Extraktionsphase durch Zentrifugieren in einem Schritt von den übrigen flüssigen Bestandteilen als darunter liegender zweiter Flüssigphase abtrennbar ist.

Eine weitere positive Wirkung der Erfindung liegt in ihrer Durchführbarkeit bei tiefen Temperaturen. So gestattet die durch die Alkoholzugabe bewirkte Gefrierpunktserniedrigung die Extraktion selbst bei Temperaturen unterhalb des Gefrierpunktes von Wasser. Dadurch können auch extrem empfindliche Inhaltstoffe schonend extrahiert werden. Derartige tiefe Temperaturen können bei anderen Extraktionstechniken wegen des natürlichen Wassergehaltes der Ausgangsstoffe nicht erreicht werden.

Wird die Zerkleinerung des nativen Stoffs in Anwesenheit von Wasser durchgeführt, steht gleichzeitig ein effektives Medium zur Kühlung bzw. Ableitung von bei der Zerkleinerung entstehender Wärme zur Verfügung. Dies ist bei im Sinne der Extraktion vorgetrockneten Ausgangsstoffen nicht möglich. Zudem schützt das Wasser, welches gegebenenfalls zuvor entgast wird, das durch die Zerkleinerung seines biologischen Oxidationsschutzes beraubte native Stoffgemenge vor der schädigenden Wirkung des Sauerstoffs.

Der im wässrigen Brei vorhandene Alkohol wirkt biozid und schützt damit die zu extrahierenden Inhaltsstoffe vor mikrobiellem Abbau.

Statt eines wasserlöslichen Alkohols kann z.B. auch ein anderes wasserlösliches organisches Lösungsmittel wie Aceton zugesetzt werden. Die Alkohole gemäß den Unteransprüchen werden jedoch bevorzugt.

Im Anspruch 1 sind die Bereiche angegeben, in denen die jeweiligen Zusätze erfolgen. Für jeden Ausgangsstoff und das ausgewählte Extraktionslösungsmittel, das im Hinblick auf die Menge der aus dem Ausgangsstoffgemenge herauszulösenden hydrophoben Verbindung in an sich bekannter Weise bemessen wird, können im Hinblick auf eine maximale Ausbeute optimale Zusatzmengen für Alkohol und Wasser einfach anhand des sich ergebenden Schleuderbildes vorab empirisch ermittelt werden. Im übrigen ist es möglich, aus der DE 195 29 795 A1 die grundlegenden Mechanismen und Bedingungen für den Zentrifugenschritt, die hiermit verbundenen einzustellenden Dichteverhältnisse und möglichen Konzentrationsbereiche für das Wasser und das einzusetzende wasserlösliche organische Lösungsmittel bzw. den wasserlöslichen Alkohol zu entnehmen. So wird je nach Trockensubstanzgehalt eines wasserhaltigen Ausgangsstoffs im Hinblick auf das zu erzielende Schleuderbild und die Dichte der sich bildenden wässrigen Phase im Vergleich zur oberen Extraktionsmittelphase mit geringerer Dichte noch Wasser zugesetzt. Grundsätzlich wird in der Regel bevorzugt die Obergrenze der Menge an wasserlöslichem Lösungsmittel (bzw. vorzugsweise dem wasserlöslichen Alkohol) auf etwa 50 Gew.%, bezogen auf die im verarbeiteten Brei enthaltene wässrige Phase, gesetzt. Es kann jedoch prinzipiell mit dem Zusatz an wasserlöslichem organischen Lösungsmittel bis etwa 65 Gew.% gearbeitet werden, wie im Anspruch 1 dargelegt. Die entsprechende untere Grenze beträgt bevorzugt 20 Gew.%. Prinzipiell möglich sind etwa Werte bis 15 Gew.%. Wenn man in dem im Anspruch 1 angegebenen Bereich für das wasserlösliche organische Lösungsmittel arbeitet, hat dies auch die oben dargelegte vorteilhafte Wirkung im Hinblick auf die sonst bei Wasseranwesenheit nicht oder nur unzureichend mögliche Extraktion.

Die Reihenfolge der Zugabe der im Anspruch 1 aufgeführten Substanzen ist prinzipiell beliebig, d.h. die Lösungen bzw. Wasser können auch gleichzeitig dem Ausgangsstoffgemenge zugesetzt werden oder wahlweise aufeinanderfolgend in den herzustellenden Brei bzw. die knetfähige Masse eingearbeitet werden.

Auch ein zufriedenstellender Zerkleinerungs- oder Mahlgrad kann anhand des Schleuderbildes auf einfache Weise ermittelt werden. Prinzipiell ist es natürlich günstig, so fein wie möglich zu zermahlen. Mit einer Korundscheibe vermahlenes Material erwies sich bisher als fein genug. Auch eignen sich noch andere fein zerkleinernde Mühlen wie Lochscheiben-, Zahnscheiben- und Kugelmühlen. Eine pauschal gültige Angabe läßt sich jedoch in Anbetracht der unterschiedlichen Ausgangsstoffe kaum machen. Im übrigen wurden vor allem bei "nassen" Produkten wie Tomaten, Möhren und dergleichen auch mit anderen mechanischen Zerkleinerungsvorrichtungen wie rotierenden Messern gute Erfolge erzielt.

Die obigen und andere vorteilhafte Weiterbildungen des die genannte Aufgabe lösenden Anspruchs 1 sind in den Unteransprüchen definiert.

Im folgenden wird eine mögliche prinzipielle Vorgehensweise nach dem erfindungsgemäßen Verfahren einschließlich von Beurteilungskriterien und möglicher Folgeschritte erläutert.
1. Das zu extrahierende wasserhaltige Ausgangsmaterial wird entweder direkt oder, wenn der Trockensubstanzgehalt des Ausgangsmaterials zu hoch ist (größer etwa 60 Gew.% bezogen auf die Masse des Ausgangsmaterials) nach Zugabe von Wasser zu einer knetfähigen Masse oder einem Brei feinstvermahlen. Der wässrige Brei sollte je nach Ausgangsmaterial zwischen vorzugsweise etwa 50 Gew.% (bei Ausgangsmaterialien mit geringer Wasserbindekraft) und etwa 80 Gew.% (bei Ausgangsmaterialien mit starker Wasserbindekraft) an Wasser bezogen auf die Gesamtmasse des das Wasser und das Ausgangsmaterial enthaltenden Breies aufweisen. Mit anderen Worten wird vorzugsweise mit einem Verhältnis Trockensubstanz zu Wasser zwischen etwa 1/1 und 1/4 gearbeitet. Allerdings wurden eine Reihe von Ausgangssubstanzen verfahrensgemäß behandelt, die bereits ohne Wasserzugabe einen Wassergehalt von mehr als 90 Gew.% aufweisen (wie z.B. Tomaten oder Paprika). Dieser hohe Wassergehalt störte nicht. Daher ist im Anspruch 1 auch nur eine untere Grenze für den Wassergehalt angegeben. Die genannte obere Grenze von 80 Gew.% wird dann vernünftigerweise eingehalten, wenn Wasser zugegeben werden muß, und hat sich als ausreichend auch bei Materialien mit hoher Wasserbindekraft herausgestellt. Der Fachmann kann im übrigen, wie weiter unten nochmals erläutert, anhand des gewonnenen Schleuderbildes auf schnelle Weise einen jeweils optimalen Bereich vorab empirisch ermitteln.
2. Entweder zum Ausgangsprodukt oder auch dem Brei bzw. der knetfähigen Masse wird wasserlöslicher Alkohol zugesetzt mit einer Menge von in der Regel 15 Gew.% bis etwa 65 Gew.%, vorzugsweise 20 Gew.% bis 50 Gew.%, der im Brei oder der Masse vorhandenen wässrigen Phase aus im wesentlichen dem Gesamtwassergehalt der Masse plus wasserlöslichem Alkohol.
3. Gleichzeitig mit dem Wasser oder auch anschließend oder vorab wird das Extraktionslösungsmittel (oder auch ein Extraktionslösungsmittelgemisch wie Öl und Hexan, Ester langkettiger Fettsäuren mit einwertigen Alkoholen und Äther) z.B. in Form von Hexan oder einem Pflanzenöl unter Berücksichtigung des Gehalts der zu extrahierenden Verbindungen eingearbeitet. Vorzugsweise werden bezogen auf das Volumen des Wasser und Alkohol enthaltenden Breies zwischen etwa 10 Vol.% und 100 Vol.% Extraktionslösungsmittel zugegeben. Die obere Grenze ist hier nicht zwingend einzuhalten, sondern stellt nur eine technisch sinnvolle, vorzugsweise einzuhaltende Grenze dar, die sich auch allein dadurch ergibt, daß vernünftigerweise nicht mit unnötig hohen, in der Technik kaum mehr zu handhabenden Extraktionslösungsmittelmengen gearbeitet wird.
4. Das so erhaltene Gemisch wird zwischen etwa 15 Minuten und einer Stunde langsam gerührt (malaxiert) und je nach Problemstellung wird dabei eine Temperatur zwischen -10 °C und 100 °C eingestellt. Die niedrige untere Grenze ist trotz des Wassergehaltes infolge der erfindungsgemäßen Alkoholzugabe möglich. Bei diesen niedrigen Temperaturen können vorteilhaft auch sehr empfindliche Inhaltstoffe mit bei diesen Temperaturen flüssig bleibenden Extraktionslösungsmitteln extrahiert werden.
5. Nach dem Malaxieren wird die Masse scharf zentrifugiert (vorzugsweise mit mehr als 1000g). Der Brei trennt sich dann im Zentrifugalfeld in ein sich kompakt aus der wässrigen Flüssigphase absetzendes Feststoffsediment, die die Sedimentschicht geringfügig übersteigende, wässrige Flüssigphase und eine darauf stehende Extraktionslösungsmittelphase mit dem extrahierten Stoff.

Bei optimaler Einstellung des Stoffsystems schwimmt im Zentrifugalfeld praktisch die gesamte Extraktionslösungsmittelphase auf einer das wasserlösliche organische Lösungsmittel enthaltenden wässrigen Phase, wobei sich zwischen den beiden Flüssigphasen eine "blanke Phasengrenze" ausbildet. Die nicht extrahierten Feststoffe setzen sich dabei aus der wässrigen Phase als kompaktes Sediment ab. Abweichungen von diesem Optimum machen sich vor allem durch folgende Phänomene bemerkbar:
1. es bildet sich keine feststofffreie Flüssigphase aus: Der Gehalt des Systems an wässriger Phase ist zu gering. Es müssen Wasser und Alkohol zugesetzt werden.
2. Zwischen wässriger Phase und Extraktionslösungsmittelphase befindet sich eine Emulsionsschicht: Die wässrige Phase enthält zu wenig Alkohol.
3. In der wässrigen Phase schwimmen Extraktionslösungsmitteltröpfchen: Die Alkoholkonzentration in der wässrigen Phase ist zu hoch.
4. Die aufschwimmende Extraktionslösungsmittelphase ist im Vergleich zur eingesetzten Menge Extraktionslösungsmittel zu gering: Es wurde nicht lange genug malaxiert, der Zerkleinerungs- oder Mahlgrad ist nicht ausreichend oder es fehlt an Alkohol in der wässrigen Phase.

Ausgehend von den im Labor ermittelten Trennbedingungen mit den im Anspruch 1 dargelegten Gehalten kann das Trennproblem in den Produktionsmaßstab übertragen werden. Zur kontinuierlichen, zentrifugalen Abtrennung der Extraktionsphase aus Extraktionslösungsmittel und herausgelöstem Inhaltsstoff eignen sich Dekanter und Separatoren.

Bei Verwendung leicht siedender Extraktionslösungsmittel wie Hexan können diese abdestilliert und in den Prozeß zurückgeführt werden. Der extrahierte Inhaltsstoff bleibt dabei als Rückstand und kann in bekannter Weise aufgearbeitet werden.

Der extrahierte Inhaltsstoff kann auch dadurch gewonnen werden, daß die Extraktionsphase soweit abgekühlt wird, daß das extrahierte Produkt im Extraktionslösungsmittel nicht mehr löslich ist und somit als Feststoff ausfällt. Dieses Ausfrierverfahren wird man für solche Inhaltsstoffe wählen, deren Löslichkeit im Extraktionslösungsmittel stark von der Temperatur abhängt und deren Ausfällgeschwindigkeit hoch ist. Das mit Resten beladene Extraktionslösungsmittel kann in diesem Fall ohne Destillation im Extraktionsprozeß kreislaufgeführt werden.

Das beschriebene Extraktionsverfahren kann ferner bedarfsweise wiederholt angewandt werden. Hierzu geht man so vor, daß die jeweils nach dem Zentrifugieren gewonnenen Feststoffe und die wässrige Phase nach Abtrennen der oberen Extraktionsphase (z.B. Öl- oder Hexanphase) erneut unter Zusatz des Extraktionslösungsmittels verfahrensgemäß behandelt werden. Die folgenden Beispiele erläutern die Erfindung.

### Beispiel 1: Extraktion von Farbstoffen aus Karotten mit Sonnenblumenöl

a) 300 g Karotten wurden mit einer Haushaltsmaschine fein zu einem Mus zerkleinert. Der abgeschätzte Wassergehalt der Karotten betrug 88 Gew.%.In einen verschließbaren Zentrifugenbecher wurden 279 g des Karottenbreis, 55,8 g käufliches, fast farbloses Sonnenblumenöl und 126 g Isopropanol gegeben und intensiv vermengt. Anschließend wurde 15 min bei Raumtemperatur stehen gelassen. Schließlich wurde 5 min bei 5000 U/min in einer Laborzentrifuge geschleudert.
   Es bildete sich eine tiefrote Ölphase aus, die durch eine "blanke" Phasengrenze getrennt über einer gelblichen Isopropanol / Wasser-Phase stand. Am Boden des Zentrifugenbechers befand sich eine kompakte, schwach-orangene Feststoffphase.
   Die ölphase wurde in üblicher Weise abgetrennt. Zum Rückstand, bestehend aus wäßriger und Feststoffphase, wurden anschließend 8 g frisches Sonnenblumenöl gegeben, durch Schütteln vermengt, 15 min bei Raumtemperatur inkubiert und zentrifugiert. Die so erhaltene neue Ölphase war im Vergleich zur ersten Ölphase deutlich schwächer gefärbt. Dies zeigte, daß der Farbstoff bereits in der ersten Extraktionstufe im wesentlichen abgetrennt worden war.
b) (Vergleichsbeispiel) 300 g Karotten wurden mit einer Haushaltsmaschine fein zu einem Mus zerkleinert. In einen verschließbaren Zentrifugenbecher wurden 279 g des Karottenbreis, und 55,8 g käufliches, fast farbloses Sonnenblumenöl gegeben und intensiv vermengt. Anschließend wurde 15 min bei Raumtemperatur stehen gelassen. Schließlich wurde 5 min bei 5000 U/min in einer Laborzentrifuge geschleudert.
   Es konnte keine Auftrennung in verschiedene Phasen erzielt werden. Lediglich einige im Vergleich zu (a) deutlich geringer rot gefärbte Öltröpfchen waren an der Oberfläche der zentrifugierten Masse im Schleuderglas erkennbar.

### Beispiel 2: Extraktion von Farbstoffen aus Tomaten mit Sonnenblumenöl

a) 250 g Tomaten wurden mit einer Haushaltmaschine wie im Beispiel 1 zerkleinert. Der abgeschätzte Wassergehalt der Tomaten betrug 94 Gew.%. 200 g des Tomatenbreis wurden nach Zugabe von 30 g käuflichem, fast farblosem Sonnenblumenöl und 94 g Isopropanol 30 min bei 70 °C in einem verschlossenen Gefäß gerührt. Nun wurde der Brei in einen Zentrifugenbecher überführt und 5 min bei 5000 U/min zentrifugiert. Nach der Zentrifugation lag eine Auftrennung in drei klar voneinander abgegrenzte Phasen vor: Auf einem kompakten, blaß-rosafarbenen Sediment stand eine leicht gelbliche Isopropanol / Wasser-Phase und darauf eine braune, leicht trübe Ölphase. Die Ölphase wurde abgetrennt und gewogen. Es wurden 30 g Rohöl zurückgewonnen. Nach Trocknung wurde das nun klare Öl im UV-Licht betrachtet, wo es eine ausgeprägte grünliche-orangene Fluoreszenz zeigte. Neben der Begutachtung von Farbunterschieden bei Tageslicht, gibt die Beobachtung von Fluoreszenz unter UV-Licht zusätzliche Hinweise auf die Anreicherung von Stoffen im Extraktionslösemittel.
b) (Vergleichsbeispiel) 250 g Tomaten wurden mit einer Haushaltmaschine wie im Beispiel 1 zerkleinert. 200 g des Tomatenbreis wurden nach Zugabe von 30 g käuflichem, fast farblosem Sonnenblumenöl 30 min bei 70 °C in einem verschlossenen Gefäß gerührt. Nun wurde der Brei in einen Zentrifugenbecher überführt und 5 min bei 5000 U/min zentrifugiert
   Es konnte keine gute Auftrennung durch Zentrifugation erhalten werden: Auf einem losen, rosafarbenen Sediment stand eine weißlich-trübe wäßrige Phase, die über einen ausgedehnten Emulsionsbereich in eine orange-farbene Ölphase überging. Wegen der schlechten Phasentrennung konnte die Ölphase nicht in reiner Form, sondern nur zusammen mit etwas Wasser abgetrennt werden. Die Ausbeute dieses sehr "nassen" Öls betrug dennoch nur 25 g. Das getrocknete, klare Öl zeigte keine Fluoreszenz.

### Beispiel 3: Extraktion von Inhaltsstoffen aus Knoblauch mit Sonnenblumenöl

Zu 94,3 g Knoblauchzehen (abgeschätzter Wassergehalt: 70 Gew.%), die weitgehend von der Schale befreit worden waren, wurden 18,9 g käufliches, fast farbloses Sonnenlumenöl gegeben. Das Gemenge wurde mit einer Haushaltsmaschine gemäß Beispiel 1 zerkleinert. 40,0 g des Breis wurde in einen verschließbaren Zentrifugenbecher gefüllt. Dazu wurden 11,7 g Isopropanol gegeben. Der Ansatz wurde innig mit einem Spatel verrührt, anschließend für 15 min bei 70 °C gehalten und schließlich 5 min bei 4000 U/min zentrifugiert.
Es konnte eine klare Trennung in drei Phasen beobachtet werden: Über einer weißen Feststoffphase stand eine milchiggelbe wäßrige Phase, die ihrerseits von einer Ölphase durch eine klare Phasengrenze getrennt war. Es konnten 5,1 g eines leuchtend-gelben Öls isoliert werden, das einen intensiven Knoblauchgeruch besaß.

## Patentansprüche

1. Verfahren zur Lösungsmittelextraktion hydrophober Verbindungen aus einem a priori im wesentlichen fett-, öl- und wachsfreien oder einem stark entfetteten, entölten oder entwachsten, zerkleinerten Stoffgemenge mittels eines oder mehrerer, diese hydrophoben Verbindungen selektiv herauslösender, unpolarer Extraktionslösungsmittel,
**dadurch gekennzeichnet,**
**daß** man das Stoffgemenge abhängig von seinem Trockensubstanzgehalt bedarfsweise unter Wasserzusatz vor oder nach der Zerkleinerung mit einem Wassergehalt von nicht weniger als 40 Gew.% bezogen auf die Masse des Stoffgemenges einschließlich des bedarfsweise zugesetzten Wassers zu einer knetfähigen Masse oder einem Brei verarbeitet,
**daß** man in das Stoffgemenge oder die Masse bzw. den Brei abhängig vom Wassergehalt der Masse oder des Breies zwischen etwa 15 Gew. % bis etwa 65 Gew.% eines wasserlöslichen organischen Lösungsmittels bezogen auf die wässrige Phase, und abhängig vom Gehalt an den hydrophoben Verbindungen im Stoffgemenge zwischen etwa 10 Vol.% und vorzugsweise 100 Vol% des oder der Extraktionslösungsmittel bezogen auf das Volumen der wässrigen Masse bzw. des wässrigen Breies einschließlich des organischen Lösungsmittels einarbeitet, und
**daß** man die Masse oder den Brei nach Malaxieren in einem Zentrifugalfeld in einem Schritt in ein Feststoffsediment, eine das wasserlösliche organische Lösungsmittel enthaltende wässrige Phase und eine von dieser durch eine klare Phasengrenze getrennte Extraktionslösungsmittelphase als obere Phase des erhaltenen Schleuderbildes vergleichsweise geringerer Dichte mit den darin gelösten hydrophoben Verbindungen trennt.

2. Verfahren nach Anspruch 1,
**dadurch gekennzeichnet,**
**daß** die hydrophoben, insbesondere stark hydrophoben, Verbindungen nicht in Ölen, Fetten oder Wachsen gelöste Feststoffe sind.

3. Verfahren nach Anspruch 1 oder 2,
**dadurch gekennzeichnet,**
**daß** das Stoffgemenge wasserhaltige native, vorzugsweise nicht tierische Stoffgemenge, insbesondere die hydrohobe Verbindung β-Carotin enthaltende Karotten, die hydrophobe Verbindung Lycopin enthaltende Tomaten, die hydrophoben Verbindungen Flavonoide und andere phenolische Antioxidantien enthaltenden Weintraubentrester umfaßt.

4. Verfahren nach Anspruch 1,
**dadurch gekennzeichnet,**
**daß** das Stoffgemenge native, nicht tierische Stoffgemenge insbesondere die Reste des hydrophoben Stoffes Kakaobutter enthaltendes, stark enstöltes Kakaopulver umfaßt.

5. Verfahren nach einem der vorhergehenden Ansprüche,
**dadurch gekennzeichnet,**
**daß** die unpolaren Lösungsmittel Öle und aliphatische Kohlenwasserstoffe, insbesondere Hexan und Fettsäureester langkettiger Fettsäuren umfassen.

6. Verfahren nach einem der vorhergehenden Ansprüche,
**dadurch gekennzeichnet,**
**daß** als das wasserlösliche organische Lösungsmittel einer oder mehrere der wasserlöslichen Alkohole Methanol, Ethanol, n-Propanol oder Isopropanol eingesetzt wird bzw. werden.

7. Verfahren nach einem der vorhergehenden Ansprüche,
**dadurch gekennzeichnet,**
**daß** insbesondere die jeweils optimalen Mengen an Wasser und wasserlöslichem Lösungsmittel vorab empirisch anhand der Beschaffenheit des im Zentrifugen-Verfahrensschritt zu gewinnenden Schleuderbildes ermittelt werden.

## Claims

1. A process for extraction by solvents of hydrophobic compounds from an a priori substantially fat-, oil- and wax-free, or strongly degreased, de-oiled or de-waxed comminuted substance mixture by means of one, or a plurality of, nonpolar extraction solvents selectively solving and extracting said hydrophobic compounds,
**characterized in**
**that** said substance mixture depending on its dry matter content, if necessary by adding water prior to, or after, said comminutation, is worked into a kneadable mass or mush with a water content of not less than about 40 % by weight of the weight of the substance mixture inclusive of the optional added water,
**that** a water-soluble organic solvent and said extraction solvent(s) are worked into said substance mixture or said mass or said mush, respectively, said water-soluble organic solvent being worked in, depending on the water content of the mass or the mush, between about 15 % per weight to about 65 % by weight of the aqueous phase containing said water-soluble organic solvent and, said extraction solvent(s) being worked in, depending on the content of hydrophobic compounds in the substance mixture, between about 10 % by volume and preferably 100 % by volume of the volume of the aqueous mass, or the aqueous mush, respectively, inclusive of the organic solvent, and
**that** said mass, or said mush, respectively, after malaxing, is separated in a centrifugal field in one step into a solid sediment, an aqueous phase containing the water-soluble organic solvent, and an extraction solvent phase of comparatively low density with the hydrophobic compounds solved therein, which extraction solvent phase is separated from the aqueous phase by a clear phase boundary and forms the upper phase of the obtained centrifugal phase picture.

2. A process according to claim 1,
**characterized in**
**that** said hydrophobic, particularly strongly hydrophobic, compounds are solids being not solved in oils, fats or waxes.

3. A process according to claim 1 or 2,
**characterized in**
**that** said substance mixture comprises native, preferably not animal, substance mixtures especially carrots containing the hydrophobic compound β-carotin, tomatoes containing the hydrophobic compound lycopin, grape skins containing the hydrophobic compounds flavonoides and other phenolic antioxidants.

4. A process according to claim 1,
**characterized in**
**that** the substance mixture comprises native, not animal, substance mixtures, particularly strongly de-oiled cocoa powder containing the residues of the hydrophobic substance cocoa butter.

5. A process according to one of the foregoing claims,
**characterized in**
**that** said nonpolar solvents comprise oils and aliphatic hydrocarbons, particularly hexane and fatty acid esters of long-chain fatty acids.

6. A process according to one of the foregoing claims,
**characterized in**
**that** as said water-soluble organic solvent one, or a plurality of, the water-soluble alcohols methanol, ethanol, n-propanol or isopropanol is (are) used.

7. A process according to one of the foregoing claims,
**characterized in**
**that** particularly the respective optimum amounts of water and water-soluble solvent are empirically found beforehand based on the condition of the resulting centrifugal phase picture to be obtained in the centrifuge process step.

## Revendications

1. Procédé d'extraction par solvants de composés hydrophobes provenant d'un mélange broyé à priori sensiblement exempt de graisse, d'huile et de cire ou d'un mélange de substances fortement dégraissé, déshuilé, ou déciré au moyen d'un ou de plusieurs solvants d'extraction non polaires dissolvant de manière sélective ces composés hydrophobes,
**caractérisé en ce**
**qu'**on travaille le mélange de substances en une masse pétrissable ou bouillie indépendamment de sa teneur en extrait sec, au besoin par ajout d'eau avant ou après le broyage avec une teneur en eau pas inférieure à 40 % en poids par rapport à la masse du mélange y compris l'eau ajoutée au besoin,
en ce qu'on incorpore dans le mélange ou la masse respectivement la bouillie entre environ 10 % en volume et de préférence 100 % en volume du ou des solvants d'extraction par rapport au volume de la masse aqueuse respectivement de la bouillie aqueuse y compris du solvant organique, et ce, en fonction de la teneur en eau de la masse ou de la bouillie comprise entre environ 15 pour cent en poids et environ 65 pour cent en poids d'un solvant organique soluble par rapport à la phase aqueuse, et en fonction de la teneur en composés hydrophobes dans le mélange de substances, et
en ce qu'en une étape, on sépare la masse ou la bouillie après malaxage dans une zone de centrifuge, en un sédiment solide, une phase aqueuse contenant le solvant organique soluble et une phase de solvant d'extraction séparée de celle-ci par une limite claire de phase, cette phase faisant office de phase supérieure du modèle de centrifuge obtenu de densité comparativement plus faible où se trouvent les avec les composés hydrophobes dissous dedans.

2. Procédé selon la revendication 1,
**caractérisé en ce que**
les composés hydrophobes, en particulier fortement hydrophobes sont des substances solides non dissoutes dans des huiles, graisses ou cires.

3. Procédé selon la revendication 1 ou 2,
**caractérisé en ce que**
le mélange de substances comprend des substances de préférence non animales, natives contenant de l'eau, en particulier des carottes contenant le composé hydrophobe, la bétacarotène, des tomates contenant le composé hydrophobe la lycopine, des marcs de raisin contenant les composés hydrophobes les flavonoïdes et autres antioxydants phénoliques.

4. Procédé selon la revendication 1,
**caractérisé en ce que**
le mélange de substances comprend des substances natives, non animales, en particulier la poudre de cacao fortement dégraissée qui contient les résidus de la substance hydrophobe, le beurre de cacao.

5. Procédé selon l'une des revendications précédentes,
**caractérisé en ce que**
les solvants non polaires comprennent des huiles et des hydrocarbures aliphatiques, en particulier de l'hexane et des esters d'acides gras à longue chaîne.

6. Procédé selon l'une des revendications précédentes,
**caractérisé en ce**
**qu'**on utilise en tant que solvant organique soluble un ou plusieurs alcools solubles, tels que le méthanol, l'éthanol, le n-propanol ou l'isopropanol.

7. Procédé selon l'une des revendications précédentes,
**caractérisé en ce**
**qu'**en particulier les quantités optimales d'eau et de solvants solubles sont déterminées au préalable de manière empirique à l'aide de la propriété du modèle de centrifuge à obtenir dans l'étape de procédé de centrifuge.
